# EUROPEAN PATENT APPLICATION

(11) **EP 2 545 983 A1**
(43) Date of publication of application: **16.01.2013**
(21) Application number: 11173506.4
(22) Date of filing: 11.07.2011
(51) Int. Cl.: B01D 63/08, B01D 61/36

(54) **Membrane distillation apparatus**

(71) Applicant: Keppel Seghers Belgium, 2830 Willebroek (BE)
(72) Inventor: Nijskens, Pieter, 2830 WILLEBROEK (BE); Kregersman, Bart, 2830 WILLEBROEK (BE); Puttemans, Sam, 2830 WILLEBROEK (BE); Dotremont, Chris, 2830 WILLEBROEK (BE)
(74) Representative: Brants, Johan P.E.

(57) **Abstract**

Described herein is air gap membrane distillation apparatus comprising a module (500) including a stack (510) of condenser frames, membrane frames and distillate frame assemblies sandwiched between a front plate (520) and a back plate (530). Inlet and outlet connectors (560, 565, 570, 575) are provided that are connected internally to fluid channels defined by openings in the frames forming the stack (510). Distillate drain outlets (550) are connected to distillate channels (555) for collecting distillate condensed on condenser surfaces within the stack (510). Modules can also be used for other types of membrane distillation, the required frames being selected for optimisation of the distillation process. By using modules, each part of the distillation process can be individually optimised without affecting the efficiency of other parts of the process.

## Description

### Field of the Invention

The present invention relates to membrane distillation apparatus and is more particularly, although not exclusively, concerned with the production of desalinated water from seawater.

### Background to the Invention

Membrane distillation is the name given to a technique for purifying liquids comprising solutes, for example, salt, using a membrane through which a distillate is extracted. Four types of membrane distillation are known, namely, direct contact membrane distillation, air gap membrane distillation, sweeping gas membrane distillation and vacuum membrane distillation.

In direct contact membrane distillation (DCMD), both a warm stream and cold stream are in direct contact with the membrane. The warm stream comprises a vaporising stream and the cold stream comprises a condensate or distillate stream. In air gap membrane distillation (AGMD), only the warm stream is in contact with the membrane. In sweeping gas membrane distillation (SGMD) and vacuum membrane distillation (VMD), the distillate is removed in vapour form by an inert gas or a vacuum respectively.

WO-A-2008/054207 discloses an air gap membrane distillation apparatus which comprises a plurality of channels through which a liquid to be purified is circulated by means of a pump. The distillate is formed by a warm fluid stream passing through a porous membrane and condensing against a wall in contact with a cold fluid stream.

Each type of membrane distillation normally requires specific apparatus that has been configured for that particular type of membrane distillation and it is not currently feasible to build membrane distillation apparatus from a set of parts that can be used in all types of membrane distillation.

It is an object of the present invention to provide membrane distillation apparatus that can readily be configured to operate in accordance with any one of the four types of membrane distillation.

### Summary of the Invention

In accordance with one aspect of the present invention, there is provided a membrane distillation module comprising:-
at least one inlet connector;
at least one outlet connector;
a plurality of frame elements;
a plurality of inlet/outlet elements, two inlet/outlet elements being associated with each frame element; and each inlet/outlet element being in fluid communication with respective ones of each inlet connector and each outlet connector; and
a plurality of sealing elements;
characterised in that each frame element is configured to provide at least one membrane frame comprising a frame element and at least one membrane surface attached to the frame element;
and in that each membrane frame is arranged in a stack with a sealing element between adjacent membrane frames, each membrane frame defining a fluid pathway through the module between each inlet connector and each outlet connector in a plane substantially orthogonal to each of the inlet and outlet connectors.

The module in accordance with the invention has the advantage of being readily configurable to optimise steps in a membrane distillation process. Longer path lengths and greater contact areas can be provided for each step as required.

In order to provide this flexibility, each frame element includes a central opening and fluid openings located at ends thereof, pairs of fluid openings being connected to respective inlet/outlet elements in each frame element to define the fluid pathway through the module, the fluid openings being in fluid communication with respective ones of each inlet and outlet connector.

A separate fluid pathway is provided through the module in an x-y plane with one inlet/outlet element forming an inlet and one forming an outlet to the fluid pathway. In addition, each frame element also defines fluid passageways in the z-direction within the stack. These fluid passageways provide common inlet and outlet passageways for at least the membrane frames.

Each frame element further comprises first and second longitudinal portions connecting ends to one another, the first and second longitudinal portions including a plurality of collector openings positioned along their length and which extend substantially orthogonally to the plane of the fluid pathway through the membrane frame.

Each sealing element is substantially identical in shape to each frame element and has a central opening and fluid openings located at ends thereof which together with fluid openings of the frame elements define fluid passageways within the stack that connect to respective inlet and outlet connectors.

Each sealing element further comprises first and second longitudinal portions connecting ends to one another, the first and second longitudinal portions including a plurality of collector openings positioned along their length and which extend substantially orthogonally to the plane of the fluid pathway through the membrane frame.

Preferably, at least one first spacer element is provided that is associated with each membrane surface, each first spacer element being positioned and fixed within the central opening of a frame element when configured to form a membrane frame.

In one embodiment where the membrane distillation apparatus comprises direct contact membrane distillation apparatus, only membrane frames are used but are orientated to make appropriate fluid connections.

In another embodiment where the membrane distillation apparatus comprises air gap membrane distillation apparatus, the stack further comprises at least one condenser frame, each condenser element comprising a frame element and at least one condenser surface fixed to the frame element. At least one second spacer element is provided that is associated with each condenser surface, each second spacer element being positioned and fixed within the central opening of the frame element when configured to form a condenser frame.

Additionally, for air gap membrane distillation, the stack further comprises at least one distillate frame assembly, each distillate frame assembly being substantially identical in shape to each sealing element and having a central opening and fluid openings located at ends thereof which together with fluid openings of the frame elements define fluid passageways within the stack that connect to respective inlet and outlet connectors.

Each distillate frame assembly further comprises first and second longitudinal portions connecting ends to one another, the first and second longitudinal portions including a plurality of collector openings positioned along their length, each collector opening having a duct system associated therewith, each collector opening extending substantially orthogonally to the plane of the fluid pathway through the membrane frame and each duct system extending in a plane substantially orthogonally to the collector openings and into the central opening of the distillate frame.

As the frame elements, the sealing elements and the distillate frame assemblies have substantially the same shape both externally and internally, it is possible to align them in a neat stack and to form the fluid passageways that extend in the z-direction throughout the stack.

It will be appreciated that each module may have different numbers of condenser frames, membrane frames and distillate frames according to the type of membrane distillation and which part of the membrane distillation process needs to be optimised.

It will also be appreciated that each first and second spacer element is designed to substantially fill the central opening of the frame element that is configured to form either a membrane or a condenser frame. In each case, the spacer element imparts turbulence to the flow through the membrane frame and the condenser frame in which it is located. In addition, each membrane and/or condenser surface is sealed to the frame element so that it defines the desired pathway through the membrane distillation apparatus.

In one embodiment of a membrane frame, one membrane surface may be provided which is located on one side of the first spacer element. The membrane surface is semi-permeable and allows both mass and heat transfer therethrough, the permeability being determined by the material used for the membrane surface. In another embodiment of a membrane frame, two membrane surfaces may be provided which are located on either side of the first spacer element.

In one embodiment of a condenser frame, two condenser surfaces may be provided, one located on each side of the spacer element. Both condenser surfaces are impermeable and which together define a fluid path through the condenser frame but allow heat transfer therethrough.

In accordance with another aspect of the present invention, there is provided membrane distillation apparatus comprising a plurality of modules as described above, each module being connected such that the outlet connector from one module forms the inlet connector to an adjacent module.

This has the advantage that the path length over which membrane distillation takes place can be increased and optimised.

It is preferred that, if the modules are stacked close together to minimise the footprint of the apparatus, adjacent modules are separated by separator plates which are adapted to provide fluid communication between adjacent modules.

Each module may be configured for air gap membrane distillation and may comprise at least one condenser frame and at least one membrane frame, each membrane frame being separated from each condenser frame by a distillate frame.

At least one module may be configured for direct contact membrane distillation forming a distillation production module and may comprise a membrane channel including at least one membrane frame and a distillate collection channel including at least one membrane frame, each membrane frame in the membrane channel being flipped with respect to each membrane frame in the distillate collection channel, the distillation production module providing both mass and heat transfer across the membrane surface.

The orientation of each membrane frame in the membrane channel with respect to each membrane frame in the distillation collection channel enables the identical membrane frames to be used for the entire distillation production module and the flipping provides the appropriate fluid connections through the inlet/outlet elements mounted in each frame.

A heat transfer unit may be formed by a condenser channel including at least one condenser frame and a heat recovery channel including at least one condenser frame, each condenser frame of the condenser channel being flipped with respect to each condenser frame of the receiving channel, the condenser channel and the receiving channel being respectively connected to the membrane channel and the distillate collection channel of the distillation production module.

The orientation of each condenser frame in the condenser channel with respect to each condenser frame in the heat recovery channel enables the identical condenser frames to be used for the entire heat transfer module and the flipping provides the appropriate fluid connections through the inlet/outlet elements mounted in each frame.

The heat transfer unit and the distillation production module may be separated by a separator plate adapted to provide fluid communication therebetween. Again, this has the advantage of minimising the footprint of the apparatus, as well as reducing material costs and dead volume within the apparatus.

At least one heater element may be connected between the heat transfer unit and the distillation production module. This is to increase the temperature of the fluid being processed.

By using a modular system in accordance with the present invention, the efficiency of the membrane distillation process can be optimised. For example, each module can be configured to have several frames connected within the module as well as connecting modules in series to increase the overall path length for same footprint. Due to the close proximity of modules, improved heat transfer can be obtained with reduced energy input due to pre-heating of the fluid due to the specific configuration of the apparatus. In addition, by reducing the number of conduits connecting the modules, material costs are reduced.

Moreover, the modules may be connected either in series or in parallel in accordance with the particular membrane distillation apparatus of which they form a part.

### Brief Description of the Drawings

For a better understanding of the present invention, reference will now be made, by way of example only, to the accompanying drawings in which:-
Figure 1 illustrates a perspective view of a frame element in accordance with the present invention;
Figure 2 illustrates a detailed perspective view of one end of the frame element shown in Figure 1;
Figure 3 illustrates an exploded perspective view of an inlet/outlet for use in the frame element shown in Figure 1;
Figure 4 illustrates a perspective view of a sealing element in accordance with the present invention;
Figure 5 illustrates an exploded perspective view of a duct system that forms a portion through a distillate frame element in accordance with the present invention;
Figure 6 illustrates a membrane distillation module in accordance with the present invention;
Figure 7 illustrates a schematic layout of a first embodiment of three membrane distillation modules shown in Figure 6 connected in series;
Figure 8 illustrates a schematic layout of a second embodiment of three membrane distillation modules shown in Figure 6 connected in series;
Figure 9 illustrates an exploded perspective view of the membrane distillation modules shown in Figure 6 but which are spaced from one another by separator plates;
Figure 10 illustrates a schematic layout of the three membrane distillation modules shown in Figure 9 which are separated from one another by separator plates;
Figure 11 illustrates a schematic layout of an air gap membrane distillation system;
Figure 12 illustrates a schematic layout of a direct contact membrane distillation system; and
Figure 13 illustrates a schematic layout of a direct contact membrane distillation system including a separator plate.

### Detailed Description of the Invention

The present invention will be described with respect to particular embodiments and with reference to certain drawings but the invention is not limited thereto. The drawings described are only schematic and are non-limiting. In the drawings, the size of some of the elements may be exaggerated and not drawn on scale for illustrative purposes.

It will be understood that the terms "vertical" and "horizontal" are used herein refer to particular orientations of the Figures and these terms are not limitations to the specific embodiments described herein.

Similarly, the terms "x-direction", "y-direction", "z-direction" and "x-y plane" are used to describe the orientation of the specific embodiments but it will be understood that these terms are used for ease of explanation and are therefore not limiting with respect to the invention as described below.

In accordance with the present invention, elements are provided that can be configured to implement different types of membrane distillation apparatus. These elements comprise frame elements, sealing elements, membrane and condenser surfaces, spacer elements, distillate frames and conduit elements. The frame elements form the basis of each section of the apparatus and can be configured to provide condenser frames, using spacer elements together with suitable condenser surfaces, and membrane frames using spacer elements and suitable membrane surfaces. Distillate frames are also provided to define distillate channels through which distillate can be extracted in air gap membrane distillation as will be described in more detail below.

The present invention allows optimisation of each part of the distillation process without being detrimental to the optimisation or efficiency of any other part of the process. The present invention is also not limited to air gap membrane distillation but can be used for all four types of membrane distillation as described above.

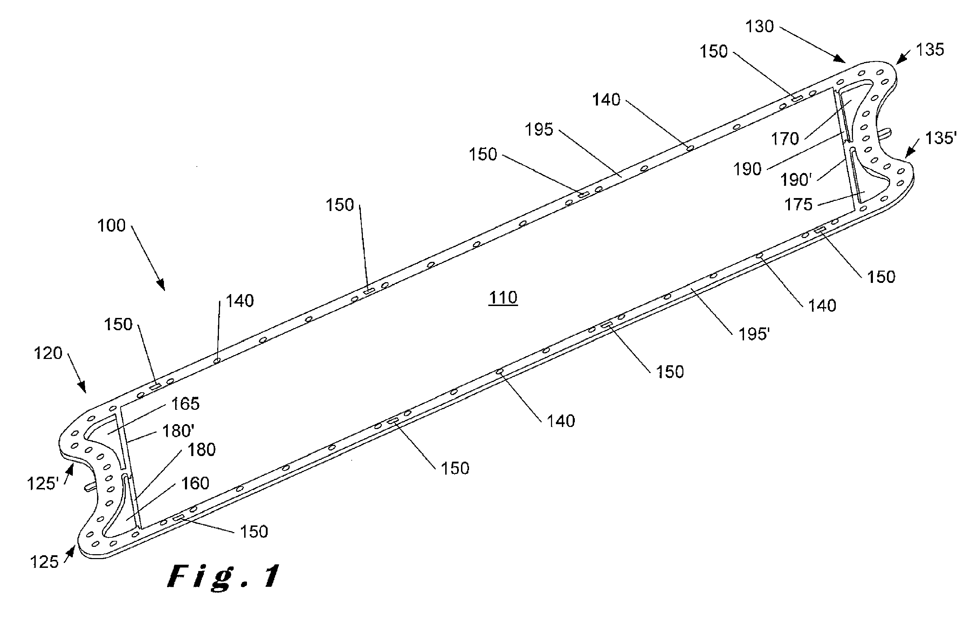

Referring initially to Figure 1, a frame element 100 is shown in accordance with the present invention. Frame elements 100 form the building blocks for membrane distillation and form the basis for condenser frames and membrane frames. The frame element 100 has a substantially elongate shape which defines a central opening 110, a first end portion 120 and a second end portion 130. The first and second end portions 120, 130 are substantially identical but rotated through 180° with respect to the central opening 110. The central opening 110 is designed to receive a spacer element that supports a membrane surface in a membrane frame or at least one condenser surface in a condenser frame as will be described in more detail below.

Apertures are provided around the periphery of the frame element 100 as shown. Some of the apertures comprise bolt holes 140 through which bolts (not shown) are inserted to tighten the assembled membrane distillation apparatus. Some of the apertures comprise distillate drain holes 150, and as shown in the specific embodiment of Figure 1, there are eight distillate drain holes 150 arranged in the frame element 100, four distillate drain holes on each side of the frame 100.

Although eight distillate drain holes 150 are shown in this particular embodiment of the present invention, it will be appreciated that any suitable number of distillate drain holes may be provided.

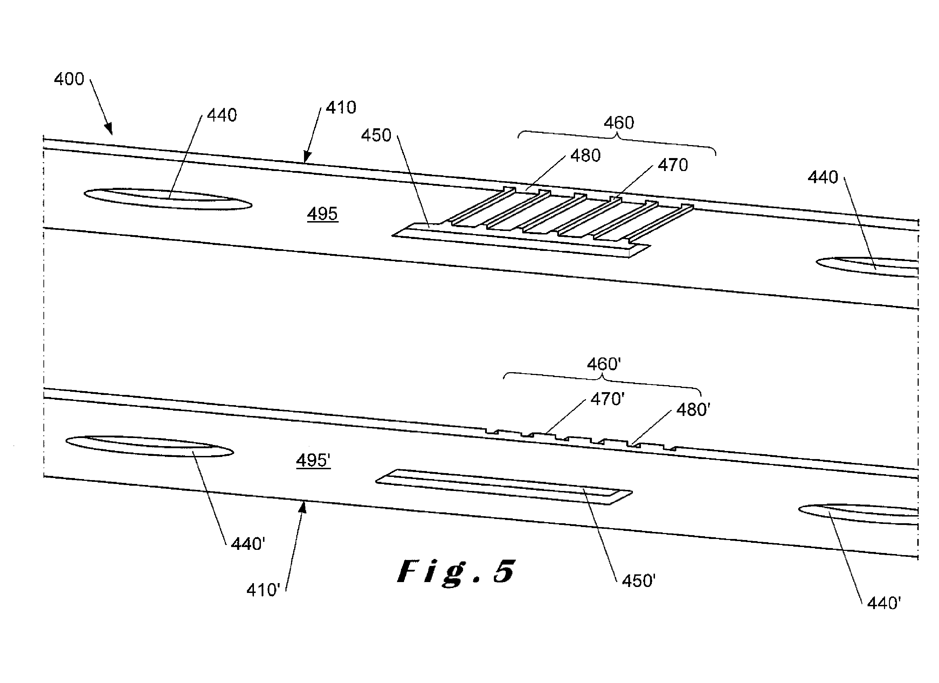

Although the distillate drain holes 150 are shown as having a rectangular cross-section, it will be appreciated that they can have any suitable cross-section but a cross-section having at least one straight edge is preferred for better sealing as will be described in more detail with reference to Figure 5 below.

Each end portion 120, 130 is defined by a shaped end portion as shown. Each end portion 120, 130 of the frame element 100 comprises fluid openings 160, 165, 170, 175 which when the frame element 100 is assembled in a membrane distillation apparatus define fluid passageways within the apparatus as will be described in more detail below. Each fluid opening 160, 165, 170, 175 is defined by a portion 125, 125', 135, 135' of respective end portions 120, 130 as shown, and a transverse portion 180, 180', 190, 190' as shown. Inlet/outlet elements (not shown) are mounted in the transverse portions 180, 190 so as to provide a fluid inlet and a fluid outlet for the particular configuration of frame, namely, a condenser frame or a membrane frame.

Although transverse portions 180, 190 are shown in Figure 1 as having a different thickness to transverse portions 180', 190' to receive the inlet/outlet elements, it is preferred that the transverse portions 180, 190 are either removed from the frame element 100 or are not formed as part of the frame element 100 so that they can be replaced by inlet/outlet elements. It will be appreciated, however, that regardless of how the inlet/outlet elements are fixed within the frame element 100, the total overall thickness of the transverse portions 180, 190 with the inlet/outlet elements in place is the same as the thickness of the rest of the frame element 100 so that efficient sealing can be provided.

The central opening 110 of the frame element 100 is defined by transverse portions 180, 180', 190, 190' and edges 195, 195' and is empty or vacant until a spacer element is inserted as will be described in more detail below.

The number of bolt holes 140 may comprise any number between four and sixty four depending on the particular configuration of the assembled membrane distillation apparatus. In this embodiment, fifteen bolt holes are shown in each end portion 120, 130 with seventeen along each longitudinal edge 195, 195' of the frame element 100 around the central opening 110. It is preferred, although not essential, that a pair of bolt holes 140 are located one on either side of a distillate drain hole 150 to assist with the sealing as will be described in more detail below.

However, distillate drain holes 150 are usually only used in air gap membrane distillation (AGMD), but can also be used in vacuum membrane distillation (VMD) and sweeping gas membrane distillation (SGMD). Distillate drain holes are not required for direct contact membrane distillation (DCMD). Whilst these distillate drain holes 150 are provided in each frame 100, it will be appreciated that they can be sealed when not required.

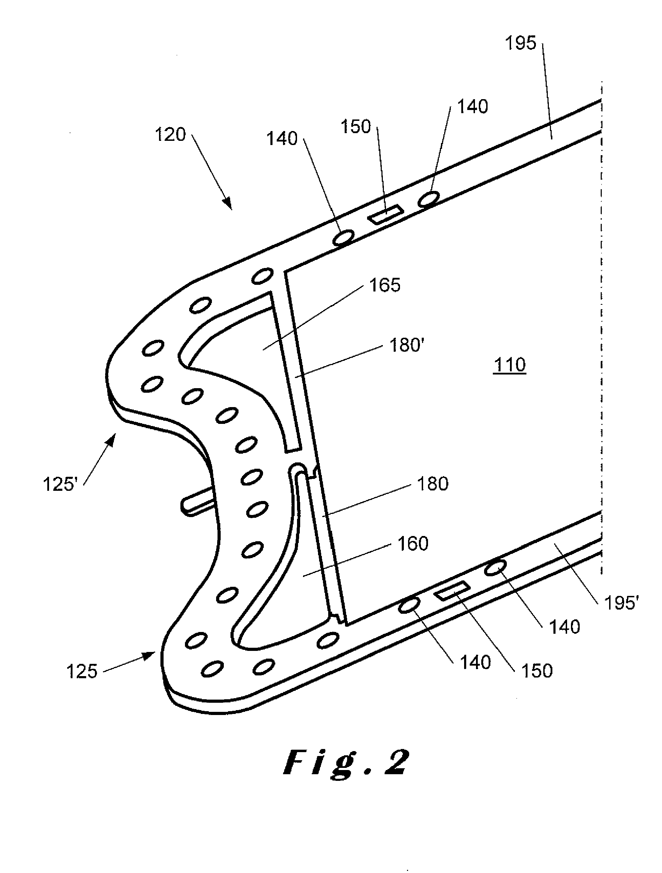

Figure 2 illustrates an enlarged view of the first end portion 120. As described above, the first and second end portions 120, 130 are effectively identical but rotated by 180° with respect to one another. Components that have already been described with reference to Figure 1 are referenced alike.

As described above, an inlet/outlet element (not shown) can be mounted in transverse portion 180 of the frame element 100. In this case, transverse portion 180' is solid and continuous. At the other end portion 130 (Figure 1), an inlet/outlet element (also not shown) can be mounted in the transverse portion 190 and the transverse portion 190' is solid and continuous.

It will be appreciated that, as an alternative, transverse portions 180', 190' may receive the inlet/outlet elements and the transverse portions 180, 190 are solid and continuous. This alternative provides the same effect and provides the same fluid connections but may require that the frame element 100 is used in different orientations when configured as membrane frame and/or a condenser frame as will be described in more detail below.

As shown in Figures 1 and 2, the transverse portions 180, 190 do not have the same thickness as the transverse portions 180', 190', but with the thickness of the inlet/outlet elements, they are substantially the same thickness as the transverse portions 180', 190'. Alternatively (not shown), the transverse portions 180, 190 may be replaced entirely by inlet/outlet elements as described above. It is preferred that the transverse elements 180, 190 are replaced by the inlet/outlet elements for ease of assembly. As described above, the overall thickness of the transverse portions 180, 190 with inlet/outlet elements need to be the same thickness as the rest of the frame element 100.

When the frame element 100 is used to configure a membrane frame through which mass and heat transfer takes place during the distillation process, a first spacer element (not shown) is positioned and fixed within the central opening 110 as defined by the inlet/outlet elements (not shown) located in transverse portions 180, 190, transverse portions 180', 190' and longitudinal edges 195, 195'. The first spacer element substantially fills the central opening 110 and is provided to impart turbulence to flow through the membrane frame as will be described below. In one embodiment, one membrane surface is provided which is located on one side of the first spacer element and through which the mass and heat transfer occurs. Here, heat and mass transfer occurs in a direction that is substantially orthogonal to the plane of the membrane surface and away from the first spacer element. However, in another embodiment, it may be desirable to have a membrane surface on each side of the first spacer element so that heat and mass transfer may occur on both sides of the first spacer element but in opposite directions away from the first spacer element.

The membrane surface comprises a hydrophobic semi-permeable membrane which is sealed to the frame element 100 around the central opening 110 and is supported by the first spacer element. The membrane has a pore size of around 0.1 µm but it will be appreciated that other pore sizes can be used. The semi-permeable hydrophobic membrane may comprise polytetrafluoroethylene (PTFE), polyvinylidene fluoride (PVDF), polypropylene, polyethylene or any other suitable hydrophobic material. In addition, the permeable membrane may be laminated with other materials to protect it against damage due to abrasion, for example, due to small particles being present in the fluid flowing over it. The lamination may also provide mechanical strength. Examples of suitable materials for lamination include polypropylene and polyethylene.

In addition, the semi-permeable membrane may also comprise microfiltration and ultrafiltration membranes made from, for example, polyethersulphone, polysulphone, polyacrylonitrile, and polyamide. It is preferred that the surface of the membrane is at least partially hydrophobic, and it may be necessary to treat the surface if a material is used that does not have sufficient hydrophobicity, for example, by coating or any other suitable process to provide desired hydrophobicity.

When the frame element 100 is used to configure a condenser frame, a second spacer element (not shown) is positioned and fixed within the central opening 110 as defined by the inlet/outlet elements (not shown) located in transverse portions 180, 190, transverse portions 180', 190', and longitudinal edges 195, 195'. The second spacer element substantially fills the central opening 110. Two layers of impermeable material are sealed to the frame element 100 around the central opening 110 encasing the second spacer element to define a condenser channel therebetween.

The second spacer element is provided to impart turbulence to the fluid as it flows through the condenser frame, that is, between the two sheets of impermeable material and over the second spacer element.

Inlet/outlet elements are provided in respective transverse portions 180, 190 to allow fluid to be introduced into the condenser channel defined by the two layers of impermeable material from fluid opening 160, and to be extracted from the condenser channel through fluid opening 170. Once the inlet/outlet elements are in place, the layers of impermeable material can be sealed to the frame element 100 along transverse portions 180', 190' and longitudinal edges 195, 195', and over the inlet/outlet elements located in the transverse portions 180, 190. This forms a substantially sealed pathway or channel for fluid to flow through the condenser frame.

The material used for the first and second spacer elements may comprise any suitable netting material, woven material or non-woven material provided it can impart turbulence to the fluid as it passes through the spacer element. Netting materials and woven materials can be made from filaments of polymeric material, for example, polypropylene, polyethylene, ethylene vinyl acetate (EVA) etc. The netting produced using such filaments may define any suitable shapes including regular and irregular shapes, for example, rectangles, diamonds, waves or asymmetrical shapes. In a preferred embodiment, the spacer element may comprise a non-woven material having at least one surface having diamond shapes formed thereon that provide the required turbulence to the fluid flowing through the membrane channel and/or condenser channel formed in the membrane frame and/or condenser frame as described above.

It will readily be appreciated that the first spacer element used in a membrane frame and the second spacer element used in a condenser frame to impart turbulence may be identical. However, whilst it is preferred that the first and second spacer elements are identical to reduce the number of elements required to configure membrane distillation apparatus in accordance with the present invention, it will be appreciated that the first and second spacer elements may differ in other embodiments without departing from the present invention.

The impermeable material provided on each side of the second spacer element may comprise films made from polypropylene, polyethylene, polyethylene terephthalate (PET) or any other suitable material. One of the impermeable material layers may comprise a foil layer, for example, an aluminium foil, that is provided to assist in the formation of the distillate as will be described in more detail below. However, if aluminium foil is to be used, it needs to be layered with polypropylene and/or polyethylene to form a composite material that protects the aluminium foil from the environment within the membrane distillation apparatus. For example, two polypropylene or PET layers may be provided on either side of a central aluminium foil layer to form the impermeable material used in condenser frame.

In the described embodiment, the frame element 100 is typically 1500mm long, 500mm wide and 2mm thick. Each frame element 100 is preferably injection moulded in polypropylene as it is a relatively inexpensive process once the mould has been made. Polypropylene has the advantage of being strong and rigid and can add to the structural strength to a stack of condenser and membrane frames. In addition, polypropylene has good temperature, pressure and corrosive resistance.

Whilst polypropylene is described as a preferred material for the frame element 100, it will be appreciated that the frame element 100 may be made from different materials and have different thicknesses according to the particular application. In some applications, it may be necessary to use a reinforced material, for example, to combat the effects of heat degradation.

In accordance with the present invention, the mould used for injection moulding can be adapted to provide different thicknesses of material and different materials, as well as different geometries of the element being moulded. For example, it may be desirable to add surface features to other elements that can be made using the same mould, for example, distillate frames as will be described in more detail below.

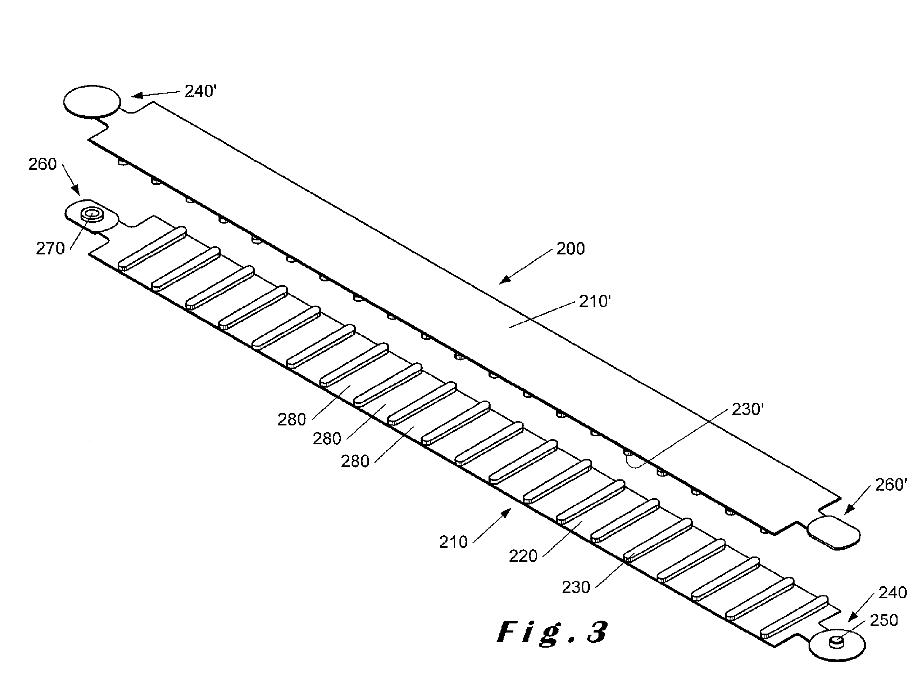

An inlet/outlet element 200 is shown in Figure 3. The inlet/outlet element 200 comprises two identical member portions 210, 210' that are placed on top of one another to define a plurality of inlet/outlet channels (not shown). Member portion 210 will be described in more detail but it will be appreciated that member portion 210' has the same features. Member portion 210 comprises a substantially elongate flat base portion 220 on which a plurality of ribs 230 are formed. In this particular embodiment, twenty ribs 230 are equally spaced along the length of the base portion 220. Similarly, member portion 210' has the same number of ribs 230' that abut the ribs 230 of the member portion 210 when the inlet/outlet element 200 is assembled.

In order to join the two member portions 210, 210' to one another, connectors are provided at the ends of each member portion 210, 210'. Only the connectors provided on member portion 210 are visible in Figure 3. At one end 240, a male connector 250 is provided, and at the other end 260, a female connector 270 is provided. These connectors 250, 270 engage with respective ones of the connectors (not shown) provided in respective ends 240', 260' of the member portion 210', that is, the male connector 250 at end 240 engages with a female connector (not shown) at end 260' and a female connector 270 at end 260 engages with a male connector (not shown) at end 240'.

Once the connectors 250, 270 are joined to one another, the inlet/outlet element 200 is formed with the ribs 230 of member portion 210 abutting ribs 230' of member portion 210'. The abutment of the ribs 230, 230' form channels 280 through which fluid can flow. In this embodiment, nineteen channels 280 are formed by the abutment of the twenty ribs 230, 230'.

An inlet/outlet element 200 in this embodiment is typically 200mm long, 20mm wide and 2mm thick. It will be appreciated that these dimensions are chosen in accordance with dimensions of the frame element 100 with which they are to be used. In one embodiment, the inlet/outlet elements 200 are mounted on the transverse portions 180, 190. In the preferred embodiment, the inlet/outlet elements 200 replace the transverse portions 180, 190 and be fixed in place by gluing, for example.

As described above, inlet/outlet elements 200 are located in transverse portions 180, 190 of the frame element 100 (Figures 1 and 2) and are fixed in position using any suitable method, for example, gluing. For a membrane frame, the membrane surface is sealed to the inlet/outlet elements 200, and, for a condenser frame, the impermeable layers are sealed to the inlet/outlet elements 200 so as to provide a sealed fluid flow path from fluid opening 160, through the inlet/outlet element 200 located in the transverse portion 180, through the condenser channel formed by the two impermeable layers as described above, through the inlet/outlet element 200 located in the transverse portion 190 to the fluid opening 170.

It will be appreciated that there are different fluid flow paths for condenser frames and membrane frames within the membrane distillation apparatus and it is therefore necessary to change the orientation of the condenser frame or the membrane frame with respect to the other frame. Following the modular system of the present invention, this can easily be achieved by flipping or rotating one frame through 180° along its longitudinal axis so that the inlet/outlet elements 200 are fluidly connected to the correct fluid openings, for example, a condenser frame must be connected to respective fluid openings 160, 170, and a membrane frame must be connected to respective fluid openings 165 and 175 or vice versa. Alternatively, the inlet/outlet elements for a membrane frame can be provided in transverse portions 180', 190' to provide the fluid connection with respective fluid openings 165 and 175 in the case where the frame elements 100 are not symmetrical and cannot be merely flipped over to provide the desired fluid connections.

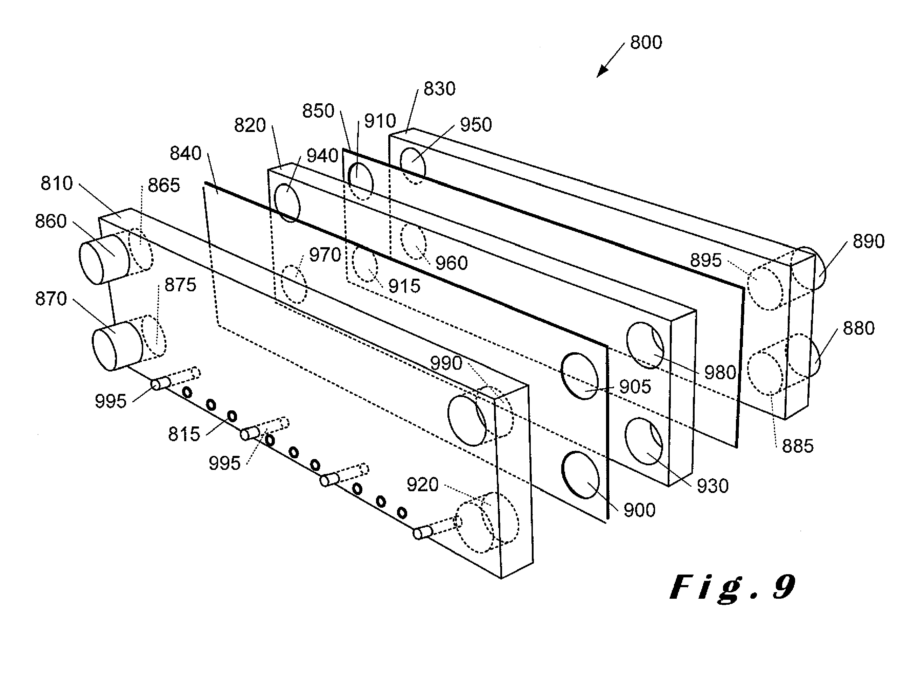

The advantage of the former solution is that the inlet/outlet elements 200 can be assembled within the frame element 100 ready for configuration as either a condenser frame or a membrane frame, and once configured, a membrane frame and a condenser frame are rotated as described above to make the correct connections with the correct fluid openings. This will be described in more detail below with reference to Figure 9.

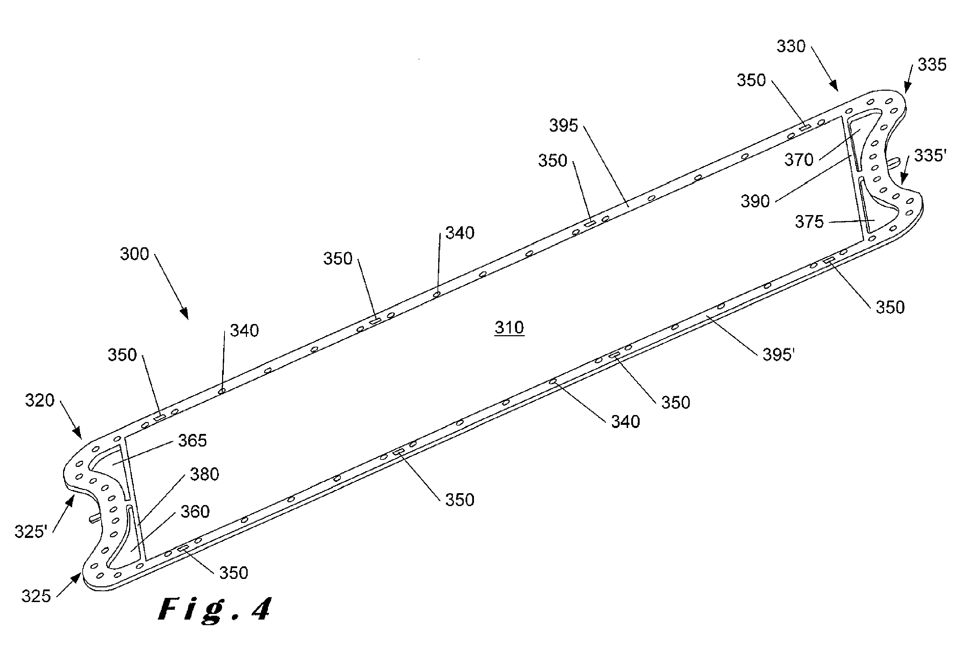

Figure 4 illustrates a sealing element 300 in accordance with the present invention. The sealing element 300 is identical in dimensions and shape to that of the frame element 100. It has a central opening 310, a first end portion 320 and a second end portion 330. In this case, the first and second end portions 320, 330 are identical and the sealing element has longitudinal and transverse symmetry about respective centre lines (not shown). A plurality of bolt holes 340 is provided around the periphery of the sealing element 300 for receiving bolts (not shown) that hold the membrane distillation apparatus in the assembled position. In addition, distillation holes 350 are provided. It will readily be understood that the positioning of the bolt holes 340 and the distillation holes 350 coincide with the positioning of the bolt holes 140 and distillation holes 150 respectively of the frame element 100.

Each end portion 320, 330 is defined by a shaped end portion as shown. Each end portion 320, 330 of the sealing element 300 comprises fluid openings 360, 365, 370, 375 which when the sealing element 300 is assembled in a membrane distillation apparatus define fluid passageways within the apparatus as will be described in more detail below. Each fluid opening 360, 365, 370, 375 is defined by a portion 325, 325', 335, 335' of respective end portions 320, 330 as shown, and a transverse portion 380, 390 as shown. Transverse portions 380, 390 differ from transverse portions 180, 180', 190, 190' of frame element 100 in that they are continuous, and, when assembled in membrane distillation apparatus, form a seal against the transverse portions 180', 190' and inlet/outlet elements 200.

The central opening 310 of the sealing element 300 is defined by transverse portions 380, 390 and longitudinal edges 395, 395' in a similar way to the central opening 110 of the frame element 100.

The sealing element 300 is made from a soft material so that it can be compressed between the frame elements 100 of the membrane distillation apparatus to provide a seal. The sealing element 300 can be made from a natural rubber, a synthetic rubber or any other suitable soft material that can form a seal. Examples of synthetic rubber materials include thermoplastic vulcanizates (TPV), which combine the properties of thermoplastic materials and vulcanised rubber, and ethylene propylene diene monomers (EPDM). Both TPVs and EPDM can be injection moulded and provide flexibility and low compression.

The sealing element 300 can be made by injection moulding using the same mould as that used to mould the frame element 100. In this case, the sealing element 300 can be made to a uniform thickness in the range of, for example, 0.1mm to 2mm. A preferred thickness for the sealing element is 0.75mm which is within the range that can be provided using injection moulding techniques for this size of sealing element. It will be appreciated that it may be possible to obtain smaller thicknesses if the sealing element 100 has different dimensions. Ideally, it is preferred that the sealing element be as thin as possible.

As an alternative to sealing element 300, a layer of glue may be used to provide the seal. This inherently provides a thinner sealing element. In some embodiments, it may necessary to use a sealing element and a layer of glue to provide the required sealing properties for the membrane distillation apparatus.

Suitable glues that can be used include polyurethane, silicone, epoxy and polyacrylate glues.

In AGMD apparatus, distillate is collected using a distillate frame assembly which is identical in shape to sealing element 300. It has a central opening, and identical first and second end portions. As described above for the sealing element 300, each end portion has a shaped end portion which defines fluid openings that define fluid passageways within the apparatus as will be described in more detail below. Each fluid opening is defined by a portion of respective end portions, and a transverse portion. In a similar way to that of the sealing element 300, the transverse portions of the distillate frame element are continuous.

A distillate frame assembly may also be used for VMD apparatus and SGMD apparatus as described below, but a distillate frame assembly is not necessary for DCMD apparatus.

In Figure 5, an exploded perspective view of a portion of a distillate frame assembly 400 is shown. The distillate frame assembly 400 comprises a first distillate frame element 410 and a second distillate frame element 410', only longitudinal edges 495, 495' respectively are shown for clarity. Each distillate frame element 410, 410' has the same shape as the sealing element 300 described above with reference to Figure 4 and has bolt holes 440, 440' around the periphery of each distillate frame element for receiving bolts (not shown) that hold the membrane distillation apparatus in the assembled position. It will readily be understood that the positioning of the bolt holes 440 coincide with the positioning of the bolt holes 140 of the frame element 100 and the bolt holes 340 of the sealing element 300. In addition, distillate drain holes 450, 450' are provided that align with distillate drain holes 150 in frame element 100 and distillate drain holes 350 in sealing element 300. Although not shown in Figure 5, eight distillate drain holes 450, 450' are provided.

The distillate frame elements 410, 410' differ from the sealing element 300 in that they also include a duct system 460, 460' as shown in Figure 5. The duct system 460, 460' comprises a plurality of ribs 470, 470' that extend from the central opening of the distillate frame assembly 400 to each distillate drain hole 450, 450' formed in each distillate frame element 410, 410'. It will readily be appreciated that only one drain hole 450, 450' is shown for clarity in Figure 5 but each distillate drain hole 450, 450' will be identical. The ribs 470, 470' form partial distillate channels 480, 480' through which distillate can be extracted from the membrane distillation apparatus as will be described in more detail below. The duct system formed by the two distillate frame elements 410, 410' in the assembled distillate frame assembly 400 has a length of 30mm and a depth of 0.35mm. Typically, six distillate channels are formed by the ribs 470, 470'.

In the embodiment shown in Figure 5, two identical distillate frame elements 410, 410' are shown that, when placed on top of one another, define distillate channels (not shown) comprising the two partial distillate channels 480, 480'. In this embodiment, the ribs 470, 470' abut one another to define the distillate channels.

The distillate frame elements 410, 410' can be made of a hard plastic material, for example, polypropylene or any other suitable material, or they can be made from TPV or any other suitable synthetic or natural rubber. For example, the distillate frame elements 410, 410' may be made from two thin polypropylene frames each having a thickness of 0.75mm.

In other embodiments, only one distillate frame element 410 may be used and combined with a sealing element 300 to define the distillate channels. In this case, the distillate channels are defined by the ribs 470 of the duct system 460 formed in the distillate frame element 410 abutting the surface of the sealing element 300. In a further embodiment, the distillate channels may be defined by two sealing elements, at least one of which having the duct system 460 to form the distillate channels, and the material properties for sealing elements used for this application being chosen accordingly.

The distillate frame assembly 400 shown in Figure 5 has a sealing element 300 located on either side thereof to define the desired fluid paths within the membrane distillation apparatus. However, it will be understood that if a sealing element 300 is used in conjunction with distillate frame element 410, a sealing element is only required adjacent the distillate frame element 410. If two sealing elements 300 are used to provide the distillate frame assembly, no additional sealing elements 300 need be provided depending on the particular application.

As described above, the distillate drain holes 150 in the frame element 100 may be of rectangular cross-section. This cross-section provides a straight edge along which the distillate channels can be formed so that they run directly from the central opening of the distillate frame assembly 400 to the distillate drain holes 450. It is preferred that the same cross-section is used for all distillate drain holes to provide better sealing and ease of manufacture of the individual components.

In an assembled membrane distillation apparatus, the distillate frame assembly 400 is located adjacent a membrane frame as will be described in more detail below.

Although not shown, the distillate frame assembly may also include an optional spacer element. Such a spacer element could be identical to the first and second spacer elements described above or could be different.

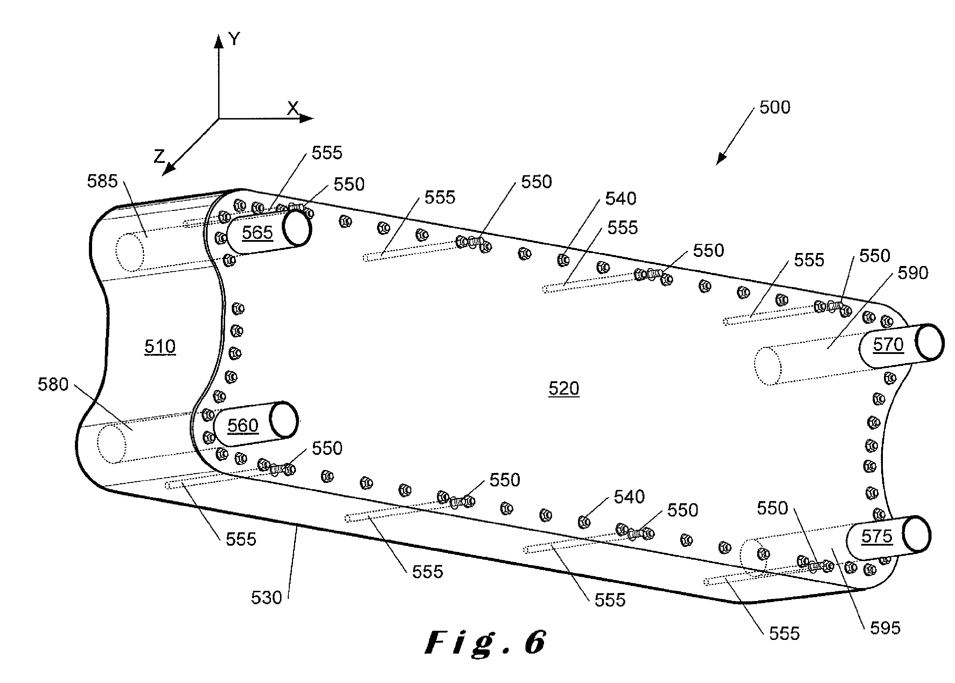

Turning now to Figure 6, an AGMD module 500 is shown that comprises the condenser frames, membrane frames, sealing elements and distillate frame assemblies described above with reference to Figures 1 to 5. The module 500 comprises a stack 510 of frames and frame assemblies (not shown) that are retained between a front plate 520 and a back plate 530. The front plate 520, the stack 510 and the back plate 530 are held together by means of a plurality of bolts 540 that extend through bolt holes 140, 340, 440 (shown in Figures 1, 4 and 5 respectively) formed in respective components of the stack 510. For clarity, only the ends of the bolts 540 are shown in Figure 6.

A plurality of distillate drain outlets 550 are also shown that extend into the stack 510 to connect with distillate drain holes 150, 350 450 (as shown in Figures 1, 4 and 5 respectively) formed in respective ones of the frame elements 100, the sealing elements 300 and the distillate frame assembly 400. The connection between the distillate drain outlets 550 and the distillate drain holes 150, 450 are shown schematically by tubes 555.

Fluid connectors 560, 565, 570, 575 are provided that connect with respective fluid passageways 580, 585, 590, 595 defined by the fluid openings 160, 165, 170, 175 in each frame element 100 (Figure 1), the fluid openings 360, 365, 370, 375 in each sealing element 300 (Figure 4), and the fluid openings (not shown) in the distillate frame assembly 400 (Figure 5). The fluid connectors 560, 565, 570, 575 extend generally in a z-direction compared to the x-y plane of the elements forming the stack 510.

In accordance with the present invention, each module 500 may comprise any suitable number of processing channels for the fluid to be treated by providing frames in accordance with one type of membrane distillation process. In Figure 6, an AGMD system is represented by module 500. Here, at least one condenser frame, at least one membrane frame, and at least one distillate frame assembly is provided. Each condenser frame defines a condenser channel as described above, each membrane frame defines a membrane channel, and each distillate frame assembly defining at a plurality of distillate channels as described above with reference to Figure 5. Fluid flows through each channel in accordance with a predetermined sequence which is determined in accordance with the connections made between the channels as will be described in more detail below. In module 500, each condenser frame is separated from a membrane frame by a distillate frame assembly.

Although the fluid connectors 560, 565, 570, 575 are shown as being located on the front plate 520 of the module 500, it will readily be understood that the fluid connectors could instead be located on the back plate 530 or some could be located on the front plate 520 and some on the back plate 530 in accordance with a particular application.

In the embodiment illustrated in Figure 6, fluid connectors 560, 575 comprise inlets to the module 500 with fluid connectors 570, 565 providing outlets. In particular, fluid connector 560 comprises a fluid inlet for the fluid to be treated and is connected to fluid passageway 580 defined by fluid openings 160 in each frame element 100, fluid openings 360 in each sealing element 300 and the corresponding fluid openings (not shown) in each distillate frame assembly 400.

Condenser frames are connected to the fluid passageway 580 connected to fluid connector 560, and are also connected to fluid connector 570 by means of fluid passageway 590 formed by fluid openings 170 in each frame element 100, fluid openings 370 in each sealing element 300, and corresponding fluid openings (not shown) in each distillate frame assembly 400.

Similarly, fluid connector 575 comprises a fluid inlet for the fluid to be treated and is connected to fluid passageway 595 defined by fluid openings 175 in each frame element 100, fluid openings 375 in each sealing element 300 and the corresponding fluid openings (not shown) in each distillate frame assembly 400.

Membrane frames are connected to the fluid opening connected to fluid connector 575, and are also connected to fluid connector 565 by means of fluid passageway 585 formed by fluid openings 165 in each frame element 100, fluid openings 365 in each sealing element 300, and corresponding fluid openings (not shown) in each distillate frame assembly 400.

In effect, the fluid connectors 560, 575 and their associated fluid passageways 580, 595 defined by aligned fluid openings within the module 500 comprise a common inlet to which each relevant channel is connected. Similarly, the fluid connectors 570, 565 and their associated fluid passageways 590, 585 defined by aligned fluid openings within the module 500 comprise a common outlet to which each relevant channel is connected.

Inlet connector 560 and outlet connector 570 form the entry and exit points for fluid flowing through each condenser channel. Similarly, inlet connector 575 and outlet connector 565 form the entry and exit points for the fluid flowing through each membrane channel. Each distillate channel is defined by the central opening of the distillate frame assembly 400, the ducts defined by the distillate frame assembly 400, and the aligned distillate drain holes in the distillate frame assembly 400, the frame element 100 and the sealing element 300.

In accordance with membrane distillation, the inlet for each distillate channel is provided by the fluid that passes through each membrane surface in each membrane channel into the central opening of the distillate frame assembly mounted adjacent thereto. After passing through the ducts formed in each distillate frame assembly 400 into the distillate drain holes 450, which connect with distillate drain holes 150 in the frame elements 100 and distillate drain holes 350 in the sealing elements 300, the fluid passes to the outlet for the distillate channel provided by the distillate drain outlets 550.

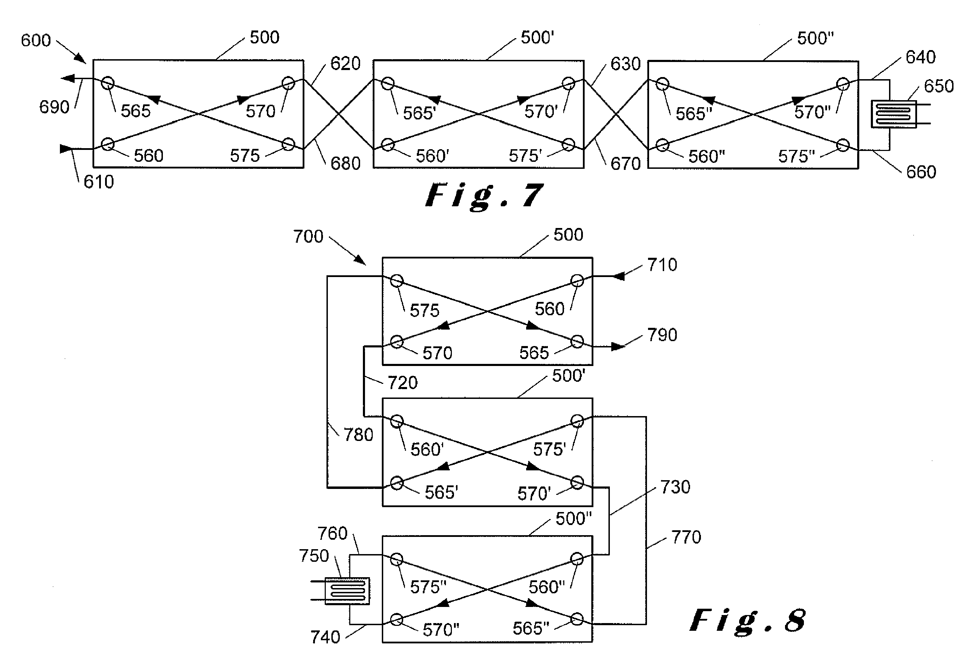

Outlet connector 570 may be connected to the input of a heater (not shown) and inlet connector 575 may be connected to the outlet from the heater. Outlet connector 565 is connected to a return line to a reservoir (not shown) as will be described in more detail below. Alternatively, the outlet connector 570 may be connected to an inlet connector of a subsequent or following module. Similarly, the inlet connector 575 may be connected to the outlet connector from a preceding or previous module. This will be described in more detail below with reference to Figures 7 and 8.

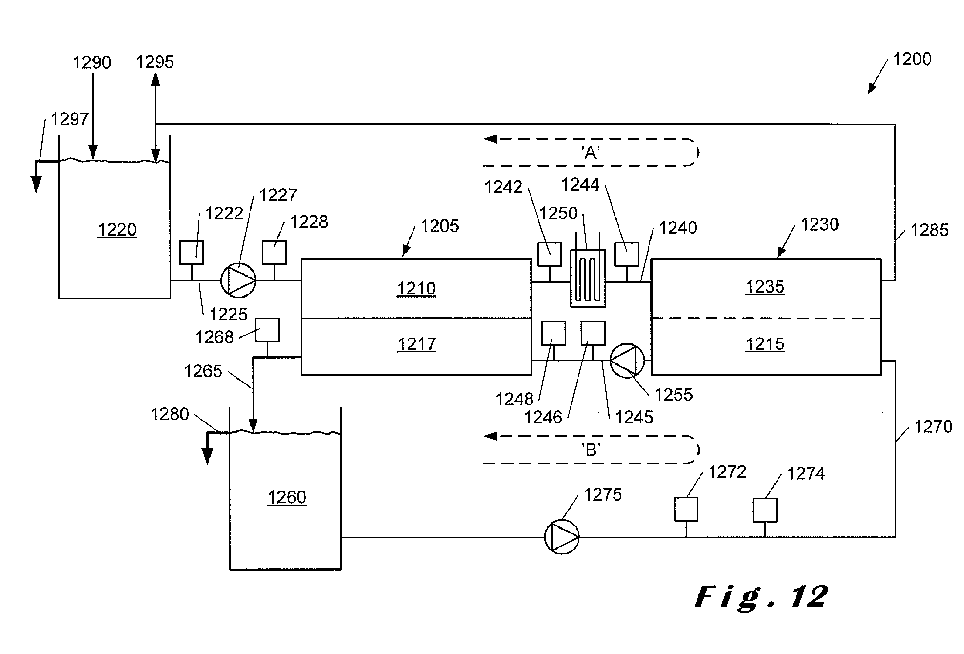

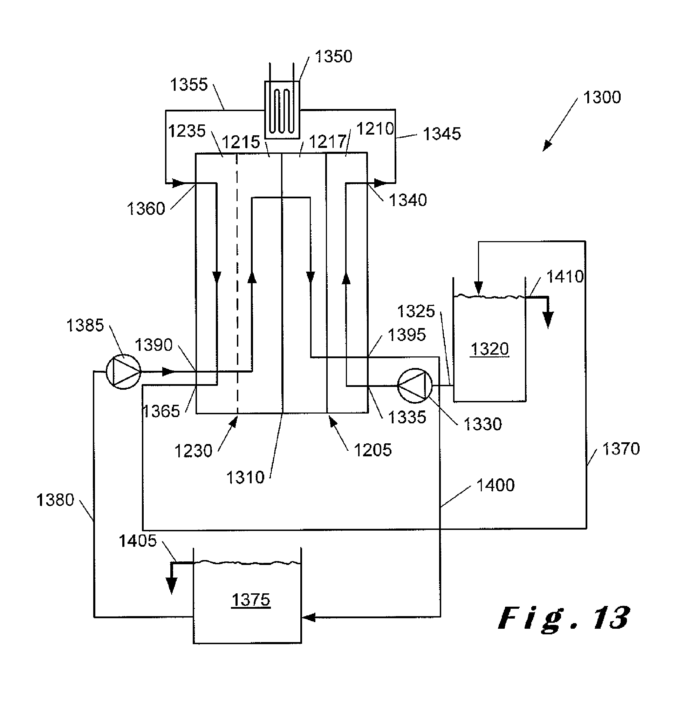

Although an AGMD module is described in Figure 6, it will be appreciated that the module 500 may be configured for DCMD as described in more detail below with reference to Figures 12 and 13. In the DCMD configuration, there is no need for distillate drain outlets 550 and their associated internal channels 555.

It will readily be appreciated that by providing internal fluid channels, a more compact module can be provided which can readily be configured in accordance with the particular type of membrane distillation that is to be carried out as described above. In addition, a number of modules 500 can be connected together in different configurations in accordance with the desired type of membrane distillation apparatus. Figures 7 and 8 illustrate respectively a possible series configuration using three modules 500, 500', 500". In each case, components that have been previously described with reference to Figure 6 are referenced alike and components for the first module is indicated by the reference numeral only (e.g. 500) whilst the components for the second and third modules are indicated by the reference numeral followed by either a prime (e.g. 500') or a double prime (e.g. 500").

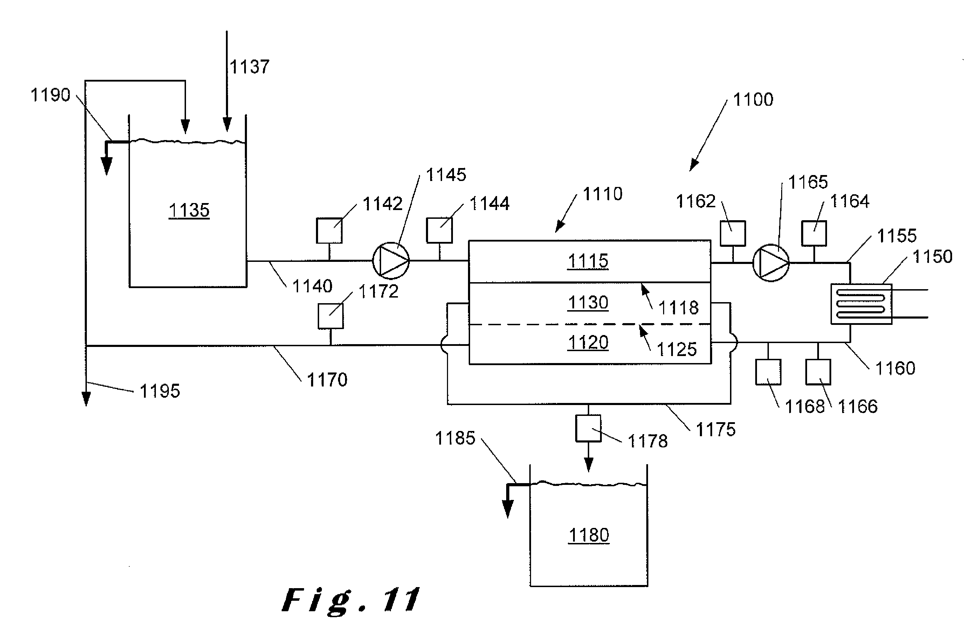

Referring first to Figure 7, a system 600 of three modules 500, 500', 500" are connected in series is shown. In the system 600, an inlet fluid 610 is supplied to the inlet connector 560 of the first module 500. The outlet connector 570 of the first module 500 is connected to the inlet connector 560' of the second module 500' by a conduit element 620 with the outlet connector 570' of the second module 500' being connected to the inlet connector 560" of the third module 500" by a conduit element 630. The outlet connector 570" of the third module 500" is connected to an input 640 of a heater element 650 which heats the fluid that has passed through at least one condenser channel provided in each of the three modules. The heater element 650 provides an output 660 that is connected to inlet connector 575" of the third module 500". The outlet connector 565" of the third module 500" is connected to the inlet connector 575' of the second module 500' by means of a conduit element 670 and the outlet connector 565' of the second module 500' is connected to the inlet connector 575 of the first module 500 by means of a conduit element 680. The outlet connector 565 of the first module 500 provides outlet fluid 690. Output fluid 690 can be returned to a reservoir (not shown) or sent to drain (also not shown) as described below with reference to Figure 11.

In Figure 8, a system 700 is shown in which three modules 500, 500', 500" also connected in series. In the arrangement 700, an inlet fluid 710 is supplied to the inlet connector 560 of the first module 500. The outlet connector 570 of the first module 500 is connected to the inlet connector 560' of the second module 500' by a conduit element 720 with the outlet connector 570' of the second module 500' being connected to the inlet connector 560" of the third module 500" by a conduit element 730. The outlet connector 570" of the third module 500" is connected to an input 740 of a heater element 750 which heats the fluid that has passed through at least one condenser channel provided in each of the three modules. The heater element 750 provides an output 760 that is connected to inlet connector 575" of the third module 500". The outlet connector 565" of the third module 500" is connected to the inlet connector 575' of the second module 500' by means of a conduit element 770 and the outlet connector 565' of the second module 500' is connected to the inlet connector 575 of the first module 500 by means of a conduit element 780. The outlet connector 565 of the first module 500 provides outlet fluid 790. Output fluid 790 can be returned to a reservoir or to a drain (both not shown) as described below with reference to Figure 11.

In the system 600 shown in Figure 7, conduit elements 620, 630, 670, 680 can be relatively short when compared to the length of conduit elements 770, 780 in the system 700 shown in Figure 8. However, the system 700 has the advantage that, by stacking the modules 500, 500', 500" as shown, a smaller footprint can be provided for the modules in membrane distillation apparatus.

It will be appreciated that similar connections can be made for modules configured for DCMD, VMD and SGMD.

As described above with reference to Figure 6, each module 500 may comprise a stack 510 of frame elements 100 that are configured to provide condenser channels, membrane channels and distillate channels. However, more than one module 500 can also be connected together to form a stack using separator plates as shown in Figure 9.

In Figure 9, a membrane distillation apparatus 800 in accordance with the present invention is shown. The apparatus 800 comprises three modules 810, 820, 830 that are separated form one another by separator plates 840, 850. Each module 810, 820, 830 is similar to the module 500 described with reference to Figure 6, but each module only forms two fluid connections with an adjacent module. Module 810 has an input connector 860 and an output connector 870 and module 830 has output connector 880 and an input connector 890. Output connector 880 and input connector 890 may be connected to a heater element (not shown) or form a direct connection with one another or with another similar module. Input connectors 860, 890 are connected to respective fluid passageways 865, 895 and output connectors 870, 880 are connected to respective fluid passageways 875, 885.

Separator plate 840 is located between module 810 and module 820 and includes two fluid port holes 900, 905 to allow fluid connection between module 810 and module 820. Separator plate 850 is located between module 820 and module 830 and includes two fluid port holes 910, 915 to allow fluid connection between module 820 and module 830. Separator plates 840, 850 also include distillate drain holes (not shown for clarity) which connect to distillate drain ports 995.

Input connector 860 is connected within the module 810 to an output port 920 that communicates directly with an input port 930 of module 820 through fluid port 900 in separator plate 840. Similarly, input port 930 is connected within the module 820 to an output port 940 that communicates directly with an input port 950 of module 830 through fluid port 910 in separator plate 850. Input port 950 is connected within module 830 to output connector 880.

Input connector 890 is connected within module 830 to an outlet port 960 that communicates with an input port 970 in module 820 through fluid port 915 in separator plate 850. Similarly, input port 970 is connected within module 820 to an output port 980 that communicates with an input port 990 of module 810 through fluid port 905 in separator plate 840. Input port 990 is connected within module 810 to output connector 870.

Each port 920, 930, 940, 950, 960, 970, 980, 990 is associated with a respective fluid passageway (not shown), and, for each module 810, 820, 830, together with fluid passageways 865, 875, 885, 895 connected to respective ones of the input and output connectors 860, 870, 880, 890, correspond to respective fluid passageways 580, 585, 590, 595 of module 500 shown in Figure 6. In particular, for module 810, fluid passageways 865, 875 and those associated with ports 920, 990 correspond to fluid passageways 580, 585, 590, 595 of module 500. Similarly, for module 820, fluid passageways associated with ports 930, 940, 970, 980 correspond to fluid passageways 580, 585, 590, 595, and, for module 830, fluid passageways 885 and 895 and fluid passageways associated with ports 950, 960 correspond to fluid passageways 580, 585, 590, 595.

Each module 810, 820, 830 also includes distillate drain holes (not shown for clarity) which connect with distillate drain ports 995 located along an edge of the membrane distillation apparatus 800. Bolt holes 815 are also shown that align with corresponding bolt holes in modules 820, 830 and separator plates 840, 850 (not shown).

Similar connections can also be made for DCMD, VMD and SGMD systems.

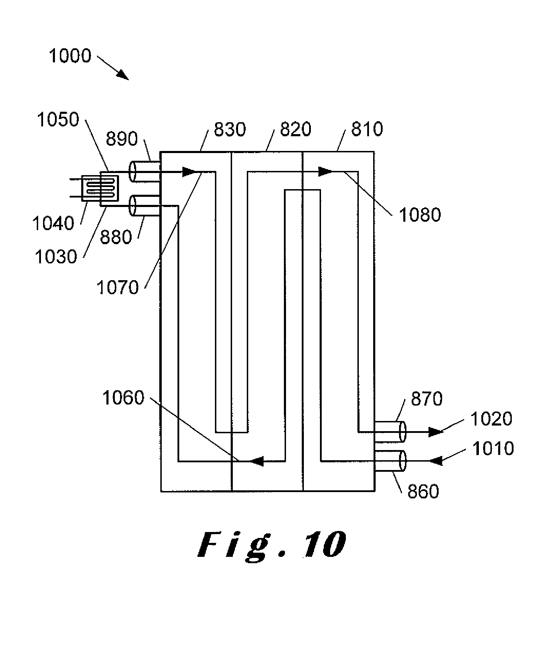

Figure 10 illustrates the operation of the membrane distillation apparatus 1000 that is similar to the membrane distillation apparatus shown in Figure 9. Components that have been previously described with reference to Figure 9 are referenced alike. A fluid input 1010 is applied to input connector 860 of module 810 and a fluid output 1020 is received from output connector 870. Output connector 880 from module 830 is connected to an input 1030 of a heater element 1040 and input connector 890 to module 830 is connected to an output 1050 of the heater element 1030. The flow of fluid between input connector 860 and output connector 880 is shown by arrow 1060 and the flow of fluid between the input connector 890 and the output connector 870 is shown by arrows 1070 and 1080.

In Figure 10, the input and output ports shown in Figure 9 between adjacent modules 810, 820, 830 are not shown for clarity. Similarly, the fluid ports in the separator plates 840, 850, and the separator plates themselves, are also not shown. It will readily be understood that the location of these input, output and fluid ports can be determined from the positions where the flow indicated arrows 1060, 1070 and 1080 cross respective boundaries between the modules 810, 820, 830.

It will be appreciated that the fluid may be passed through the apparatus 1000 multiple times to improve the recovery of both heat, through heat transfer, and distillate, through mass transfer.

Figure 11 illustrates an air gap membrane distillation (AGMD) system 1100 that can be implemented with the membrane distillation elements in accordance with the present invention. In the AGMD system 1100, a module 1110 in accordance with the present invention comprises a condenser channel 1115, defined by a frame element 100 (Figure 1) and a spacer element having a condenser surface 1118; a membrane channel 1120, defined by a frame element 100 and a membrane element (shown by a dotted line 1125); and a distillate channel 1130, defined by distillate frame assembly 400 (Figure 5), located between the condenser channel 1115 and the membrane channel 1120. The distillate channel 1130 includes an air gap (not shown) that comprises the central region of the distillate frame assembly 400.

For the orientation shown in Figure 11, liquid generally flows through the module 1110 in an x-y plane through the condenser channel 1115 and the membrane channel 1120. Some of the hot liquid passing through the membrane channel 1120 vaporises and passes through the membrane element 1125 in the z-direction which is perpendicular to the x-y plane. This vaporised liquid contacts a condenser surface 1118, forming an external part of the condenser channel 1115, condenses and forms a distillate that is collected in the distillate channel 1130, the distillate being extracted through on the distillate drain outlets 550 formed in the distillate frame assembly 400 (Figure 5).

On the inlet side of the module 1110, a reservoir 1135 containing liquid to be treated by AGMD is connected by means of a supply line 1140 to the condenser channel 1115. Liquid is introduced into the reservoir 1135 through an input 1137. A pump 1145 is provided in the supply line 1140 to pump the liquid through the system 1100. Sensor elements 1142, 1144, for example, pressure and temperature sensor elements, are also provided in the supply line 1140 to determine the physical parameters of the liquid in the supply line 1140. On the output side of the module 1110, a heater 1150 is connected to an output line 1155 from the condenser channel 1115 and also to an input line 1160 to the membrane channel 1120. A second pump 1165 is provided in the output line 1155 together with further sensor elements 1162, 1164 that determine the physical parameters of the liquid in the output line 1155. Input line 1160 also includes sensor elements 1166, 1168. A feedback line 1170 connects the membrane channel 1120 with the reservoir 1135. A sensor 1172 is provided in the feedback line 1170 to determine the condition of the liquid being returned to the reservoir 1135.

Although the sensor elements are described as being temperature and/or pressure sensor elements, it will be appreciated that other sensor elements can also be used, for example, to determine conductivity and flow rate of the liquid through the system 1100.

Distillate drain outlets (not shown) in the distillate channel 1130 are connected to a distillate line 1175 that empties into a distillate tank 1180. A flow rate meter 1178 may be provided in the distillate line 1175 for determining the flow rate of the distillate. Treated liquid is extracted from the tank 1180 via an overflow 1185. An overflow 1190 may also be provided on the reservoir 1135.

Feedback line 1170 also includes a valve (not shown) for diverting liquid from the reservoir 1135 to a drain 1195 if the liquid exiting the membrane channel 1120 does not meet predetermined criteria for returning the liquid to the reservoir. The valve can be directly controlled by the sensor element 1172 to direct liquid flow to either the reservoir 1135 or to drain 1195.

Figure 12 illustrates a direct contact membrane distillation (DCMD) system 1200 that can be implemented with the modular system for membrane distillation apparatus in accordance with the present invention. In this system, a heat transfer unit 1205, comprising a heat recovery channel (HRC) 1210 and a condenser channel 1217, is connected to a reservoir 1220 via a supply line 1225. The HRC 1210 is implemented by a plurality of condenser frames as described above. The condenser channel 1217 may be implemented by at least one condenser frame with the appropriate fluid connections, for example, each condenser frame is flipped over with respect to the condenser frames so that the inlet/outlet elements for the condenser frames are located on opposite sides of the module to those of the condenser frames forming the HRC 1210. A pump 1227 is provided in the supply line 1225 to pump liquid from the reservoir 1220 to the HRC 1210. Sensor elements 1222, 1228 are also provided in the supply line 1225.

In the heat transfer unit 1205, the HRC 1210 and the condenser channel 1217 are not in fluid connection with one another and each channel 1210, 1217 forms a part of different flow paths through the system 1200 as will be described in more detail below.

A distillation production module 1230, comprising a membrane channel 1235 and a distillate collection channel 1215, is connected to the heat transfer unit 1205 by supply lines 1240, 1245. In this case, each of the membrane channel 1235 and the distillate collection channel 1215 comprises a plurality of membrane frames. However, the membrane frames of the distillate collection channel 1215 are flipped over with respect to the membrane frames of the membrane channel 1235 to provide the correct fluid connections. Supply line 1240 connects the HRC 1210 to the membrane channel 1235 and includes a heater element 1250 together with sensor elements 1242, 1244. Supply line 1245 connects the distillate collection channel 1215 with the condenser channel 1217. Sensor elements 1246, 1248 are provided for determining physical parameters of the liquid as it passes from the distillate collection channel 1215 to the condenser channel 1217. An optional pump 1255 may also be provided in the supply line 1245.

In the distillation production module 1230, the membrane channel 1235 and the distillate collection channel 1215 are in fluid connection and distillate is formed in the distillate collection channel 1215 by vaporised liquid passing through the membrane element in the membrane channel 1235 into the distillate collection channel 1215 and condensing therein once contact is made with the liquid or other fluid flowing through the distillate collection channel 1215 as will be described in more detail below. The membrane channel 1235 and the distillate collection channel 1215 each also forms a part of different flow paths as will be described in more detail below.

A tank 1260 is connected to the condenser channel 1217 to collect the fresh water or distillate via a collection line 1255. The tank 1260 is also connected to the distillate collection channel 1215 via a supply line 1270 as shown. In supply line 1270, a pump 1275 is provided for pumping the distillate and/or other fluid stored in the tank 1260 from the tank 1260, to the distillate collection channel 1215 and the condenser channel 1217, and back to the tank 1260. Sensor elements 1272, 1274 are provided in the supply line 1270. A sensor element 1268 is provided in collection line 1265. Tank 1260 has an outlet to supply line 1270 and an overflow 1280 from which production distillate is obtained.

It will be appreciated that the heat transfer unit 1205 and the distillation production module 1230 may be switched over so that membrane distillation (mass and heat transfer) takes place before the heat transfer. This may be the case where the reservoir 1220 contains fluid at a temperature that does not need any further heat to vaporise and pass across the membrane element in the membrane channel 1235. Additionally, if the fluid is hot, there is no need to utilise a heater between the heat transfer unit 1205 and the mass and heat transfer module 1230.

As shown, this system has two flow paths. A first flow path, indicated by dotted arrow 'A', is for the liquid to be treated, for example, sea water, and comprises the reservoir 1220, the supply line 1225, the HRC 1210, the heater element 1250, the membrane channel 1235 and a return line 1285 that feeds sea water back to the reservoir 1220. A second flow path, indicated by dotted arrow 'B', is for the fresh water or distillate, that is, the water that has been treated, and comprises the tank 1260, supply line 1270, the distillate collection channel 1215, the supply line 1245 and the condenser channel 1217.

The heat transfer unit 1205 and the distillation production module 1230 operate across the first and second flow paths as only a heat transfer device and a mass and heat transfer device respectively. In the heat transfer unit 1205, the temperature of the sea water in the HRC 1210 is lower than that in the condenser channel 1217 and the warmer fresh water in the condenser channel 1217 acts to pre-heat the sea water in the HRC 1210 before it passes to the membrane channel 1235 via the heater element 1250. In the distillation production module 1230, fluid flow crosses from the membrane channel 1235 to the distillate collection channel 1215 in the z-direction perpendicular to and through the x-y plane of the membrane surface. Although fluid crosses the membrane surface as mass transfer, heat is also transferred across the membrane surface depending on the temperature of the fluid in the membrane channel 1235 and in the distillate collection channel 1215.

An inlet 1290 is provided for the reservoir 1220 and a drain 1295 is connectable to return line 1285 via a valve (not shown) that either allows the liquid in the return line 1285 to return to the reservoir 1220 or to be connected to the drain 1295. An overflow 1297 may also be provided in the reservoir 1220.

Although Figure 12 has been described with reference to DCMD, it will be appreciated that instead of fresh water, any cold fluid can be used to accept the distillate in the distillate collection channel 1215 from the membrane channel 1235. For example, a cold liquid from which the distillate can be extracted in the tank 1260 may be used. In addition, the system 1200 can be used for SGMD in which an inert gas is passed through the path defined by arrow 'B' as described above. Similarly, VMD may be used where the distillate collection channel 1215 and the condenser channel 1217 are connected in a vacuum circuit and the extracted distillate is collected in the tank 1260.

Figure 13 illustrates a more compact DCMD system 1300 which is similar to the DCMD system 1200 of Figure 12. Components which have previously been described with reference to Figure 12 are referenced alike. Here, the heat transfer unit 1205 and the distillation production module 1230 are mounted adjacent one another but are separated by a separator plate 1310. Separator plate 1310 comprises a solid plate that has a single port (not shown) through which liquid can flow.

The system 1300 comprises two flow paths as before. In a first flow path, a reservoir 1320 is connected to an inlet 1335 to the HRC 1210 of the heat transfer unit 1205 by means of a supply line 1325 and pump 1330. Outlet 1340 from the HRC 1210 is connected to a supply line 1345 connected to a heater 1350. The output from the heater 1350 is connected to a supply line 1355 that is connected to an inlet 1360 to the membrane channel 1235 of the distillation production module 1230. Outlet 1365 from the membrane channel 1235 is connected to the reservoir 1320 by means of a return line 1370. This flow path corresponds to the flow path indicated by dotted arrow 'A' in Figure 12.

In a second flow path, tank 1375 is connected to inlet 1390 of the distillate collection channel 1215 of the distillation production module 1230 via a supply line 1380 and a pump 1385. Output 1395 from the condenser channel 1217 in the heat transfer unit 1205 is connected to a return line 1400 connected to the tank 1375. This flow path corresponds to the flow path indicated by dotted arrow 'B' in Figure 12.

Production distillate is removed from the tank 1375 via overflow 1405. Reservoir 1320 may also include an overflow 1410. It will be appreciated that although not shown, there is also an inlet to reservoir 1320. Valves and sensor elements may also be provided to determine the physical parameters at each stage of the distillation process as described above with reference to Figure 12.

The system 1300 shown in Figure 13 has the following advantages over the system 1200 shown in Figure 12:-
a) lower material costs;
b) lower dead volume in the system; and
c) lower heat losses.

In addition to the embodiments described above, the liquid to be treated may have a pre-treatment, for example, a filtering stage using an appropriate filter element that removes larger particles before the liquid enters the reservoir from which the membrane distillation apparatus is fed. Alternatively, the filtering stage may be provided in the supply line from the reservoir to the condenser frame in each of the described embodiments.

It will be appreciated that the modular system of the present invention allows different types of frames to be configured from the same frame element. This reduces the cost as there is no need to make an individual frame element for each of the membrane and condenser frames. Moreover, as each sealing element has the same shape as the frame elements, they can also be made using the same mould that is used for making the frame elements.

In addition to the flexibility provided by the modular construction of the condenser and membrane frames, these frames can be stacked in any desired configuration together with distillate frame assemblies where required, to configure membrane distillation apparatus that can be used for AGMD, DCMD, VMD and SGMD.

For AGMD in its simplest form, a three-frame module is provided that defines three channels through the apparatus, namely, a membrane channel having at least one membrane frame and a condenser channel having at least one condenser frame separated by at least one distillate frame assembly.

For DCMD in its simplest form, a two-frame module is provided that defines two channels through the apparatus, namely, a membrane channel and a distillate collection channel. However, in this case, both the membrane channel and the distillate collection channel comprise membrane frames only. Here, the membrane frames in the distillate collection channel are flipped over with respect to the membrane frames in the membrane channel so that the appropriate fluid connections can be made. This is similar to that described above with reference to Figures 6 to 10 for a membrane frame and a condenser frame within a module used for AGMD.

In addition, if a heat transfer module is also used in DCMD, this comprises a different two-frame module that defines two channels through the apparatus, namely, a condenser channel and a HRC. In this case, both the condenser channel and the HRC comprise condenser frames only with the condenser frames of the HRC being flipped over with respect to the condenser frames in the condenser channel to make the appropriate fluid connections. Again, this is similar to the membrane frame and the condenser frame for AGMD described above with respect to Figures 6 to 10.

VMD can also use either a two-frame module or a three-frame module. In a two-frame module, a vacuum pump is in fluid connected to the distillate collection channel (and with the condenser channel if the heat transfer module is also connected) to create a reduced pressure in the distillate collection channel (and condenser channel if connected) so that the distillate can effectively be collected by being sucked out of the distillate collection channel. In a three-frame module, the vacuum pump is connected to the distillate outlet ports to create a reduced pressure so that the distillate produced can effectively be sucked out of the module.

For SGMD, either a two-frame or a three-frame module can be used in a similar way as for VMD. Instead of using a vacuum to collect and transport the distillate through the apparatus, a gas under pressure is introduced into the distillate collection channel through appropriate fluid connections to collect the distillate produced by the membrane channel, the gas also passing through the condenser channel if the heat transfer module is used. In the three-frame module, gas is introduced into at least one of the distillate outlet ports and collected through the other distillate outlet ports together with the distillate produced.

It will be appreciated that for each type of distillation apparatus described above, the frames for each channel may be layered so that they alternate within the module. For example, for a two-frame module, membrane frames of the membrane channel frame alternate with membrane frames of the distillation collection channel, the membrane frames of the latter channel being flipped with respect to the membrane frames of the former channel. Similarly, for the heat transfer module used in DCMD, the condenser frames of the receiving channel can be arranged to alternate with the condenser frames of the condenser channel with the frames of the former being flipped with respect to the condenser frames of the latter.

In some instances, it may be desirable to have more membrane frames in the distillation collection channel than in the membrane channel or vice versa depending on optimisation for the particular application. Similarly, for the heat transfer unit, it may be desirable to have more condenser frames in the condenser channel than that in the HRC or vice versa depending on optimisation for the particular application.

For a three-frame module, the membrane frames, the condenser frames and the distillate frame assemblies can also be layered but, in this case, each distillate frame assembly is located between a condenser frame and a membrane frame. However, the number of condenser frames, membrane frames and distillate frame assemblies can be optimised for the particular application.

The present invention is not limited to the specific embodiments described herein. Modifications are also possible depending on the scale and type of membrane distillation.

## Claims

1. A membrane distillation module (500) comprising:
at least one inlet connector (560, 575);
at least one outlet connector (570; 565);
a plurality of frame elements (100);
a plurality of inlet/outlet elements (200), two inlet/outlet elements (200) being associated with each frame element (100), and each inlet/outlet element (200) being in fluid communication with respective ones of each one inlet connector (560, 575) and each outlet connector (565, 570); and
a plurality of sealing elements (300);
**characterised in that** each frame element (100) is configured to provide at least one membrane frame comprising a frame element (100) and at least one membrane surface (1125) attached to the frame element (100);
and **in that** each membrane frame is arranged in a stack (510) with a sealing element (300) between adjacent membrane frames, each membrane frame defining a fluid pathway through the module between each inlet connector (560, 575) and each outlet connector (565, 570) in a plane substantially orthogonal to each of the inlet and outlet connectors (560, 565, 570, 575).

2. A module according to claim 1, wherein each frame element (100) includes a central opening (110) and fluid openings (160, 165, 170, 175) located at ends (120, 130) thereof, pairs of fluid openings being connected to respective inlet/outlet elements (200) in each frame element (100) to define the fluid pathway through the module, the fluid openings (160, 165, 170, 175) being in fluid communication with respective ones of each inlet and outlet connector (560, 565, 570, 575).

3. A module according to claim 2, wherein each frame element (100) further comprises first and second longitudinal portions (195, 195') connecting ends (120, 130) to one another, the first and second longitudinal portions (195, 195') including a plurality of collector openings (150) positioned along their length and which extend substantially orthogonally to the plane of the fluid pathway through the membrane frame.

4. A module according to claim 2 or 3, wherein each sealing element (300) is substantially identical in shape to each frame element (100) and has a central opening (310) and fluid openings (360, 365, 370, 375) located at ends (320, 330) thereof which together with fluid openings (160, 165, 170, 175) of the frame elements (100) define fluid passageways (580, 585, 590, 595; 865, 875, 885, 895) within the stack (510) that connect to respective inlet and outlet connectors (560, 565, 570, 575; 860, 870, 880, 890).

5. A module according to claim 4, wherein each sealing element (300) further comprises first and second longitudinal portions (395, 395') connecting ends (320, 330) to one another, the first and second longitudinal portions (395, 395') including a plurality of collector openings (350) positioned along their length and which extend substantially orthogonally to the plane of the fluid pathway through the membrane frame.

6. A module according to any one of the preceding claims, further comprising at least one first spacer element associated with each membrane surface, each first spacer element being positioned and fixed within the central opening (110) of a frame element (100) when configured to form a membrane frame.

7. A module according to any one of the preceding claims, further comprising at least one condenser frame, each condenser element comprising a frame element (100) and at least one condenser surface (1118) fixed to the frame element (100).

8. A module according to claim 7, further comprising at least one second spacer element associated with each condenser surface (1118), each second spacer element being positioned and fixed within the central opening (110) of a frame element (100) when configured to form a condenser frame.

9. A module according to any one of the preceding claims, further comprising at least one distillate frame located in the stack (510), each distillate frame being substantially identical in shape to each sealing element (300) and having a central opening and fluid openings located at ends thereof which together with fluid openings (160, 165, 170, 175) of the frame elements (100) define fluid passageways (580, 585, 590, 595; 865, 875, 885, 895) within the stack (510) that connect to respective inlet and outlet connectors (560, 565, 570, 575; 860, 870, 880, 890).

10. A module according to claim 9, wherein each distillate frame (400) further comprises a first and second longitudinal portions (495, 495') connecting ends to one another, the first and second longitudinal portions (495, 495') including a plurality of collector openings (450, 450') positioned along their length, each collector opening (450, 450') having a duct system (460, 460') associated therewith, each collector opening (450, 450') extending substantially orthogonally to the plane of the fluid pathway through the membrane frame and each duct system (460, 460') extending in a plane substantially orthogonally to the collector openings (450, 450') and into the central opening of the distillate frame.

11. Membrane distillation apparatus (800; 1000; 1100; 1200; 1300) comprising a plurality of modules (810, 820, 830; 1110; 1230) according to any one of the preceding claims, each module (810, 820, 830) being connected such that the outlet connector (920, 940) forms the inlet connector (930, 950) to an adjacent module.

12. Apparatus according to claim 11, wherein each module (810, 820, 830) is separated by separator plate (840, 850) adapted to provide fluid communication between adjacent modules (810, 820, 830).

13. Apparatus according to claim 11 or 12, wherein each module is configured for air gap membrane distillation and comprises at least one condenser frame and at least one membrane frame, each membrane frame being separated from each condenser frame by a distillate frame.

14. Apparatus according to claim 11, wherein at least one module (1230) is configured for direct contact membrane distillation forming a distillation production module and comprises a membrane channel (1235) including at least one membrane frame and a distillate collection channel (1215) including at least one membrane frame, each membrane frame in the membrane channel (1235) being flipped with respect to each membrane frame in the distillate collection channel (1215), the distillation production module (1230) providing both mass and heat transfer across the membrane surface.

15. Apparatus according to claim 14, further comprising a heat transfer unit (1205) comprising a heat recovery channel (1210) including at least one condenser frame, and a condenser channel (1217) including at least one condenser frame, each condenser frame of the heat recovery channel (1210) being flipped with respect to each condenser frame of the condenser channel (1217), the heat recovery channel (1210) and the condenser channel (1217) being respectively connected to the membrane channel (1235) and the distillate collection channel (1215) of the distillation production module (1230).

16. Apparatus according to claim 15, wherein the heat transfer unit (1205) and the distillation production module (1230) are separated by a separator plate (1310) adapted to provide fluid communication therebetween.

17. Apparatus according to claim 15 or 16, further comprising at least one heater element (1250; 1350) connectable between the heat transfer unit (1205) and the distillation production module (1230).
